(19) Europäisches Patentamt
European Patent Office
Office européen des brevets

(11) **EP 1 855 041 B1**

(12) **FASCICULE DE BREVET EUROPEEN**

(45) Date de publication et mention
de la délivrance du brevet:
**13.02.2013 Bulletin 2013/07**

(51) Int Cl.:
***F16L 11/08*** *(2006.01)* ***F16L 11/112*** *(2006.01)*

(21) Numéro de dépôt: **06291996.4**

(22) Date de dépôt: **20.12.2006**

(54) **Conduit souple de transport de fluide présentant un renforcement**

Flexibles Rohr zum Fluidtransport mit einer Verstärkung

Reinforced flexible duct for transporting fluid

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **12.05.2006 FR 0604231**

(43) Date de publication de la demande:
**14.11.2007 Bulletin 2007/46**

(73) Titulaire: **Hutchinson**
**75008 Paris (FR)**

(72) Inventeurs:
• **Mahin, Daniel**
**37520 Savonnieres (FR)**

• **Dolez, Marc**
**45160 Olivet (FR)**
• **Oesterle, Pascal**
**37530 Nazelles-Negron (FR)**

(74) Mandataire: **Jacquard, Philippe Jean-Luc et al**
**Cabinet ORES**
**36, rue de St Pétersbourg**
**75008 Paris (FR)**

(56) Documents cités:
**WO-A-97/13091        DE-A1- 19 803 656**
**US-A- 3 212 528        US-A- 4 308 896**
**US-A1- 2004 256 016**

**EP 1 855 041 B1**

**Description**

La présente invention a pour objet des conduits souples en élastomère connus sous le nom déposé de " Durit " qui sont destinés au transport de fluides, en particulier d'air chaud ou froid ou de liquides de refroidissement, notamment dans l'environnement d'un moteur d'une automobile, d'un camion ou d'une installation industrielle, voir US-A-3212528.

Les conduits souples sont le plus souvent renforcés par un tricot tubulaire noyé dans un élastomère. Ces conduits permettent un bon passage des coudes et ils sont plus particulièrement adaptés à des applications requérant un diamètre relativement faible (jusqu'à 50 à 60 mm) et des faibles pressions, notamment à cause de l'utilisation de fils à gros titres et d'une armature à mailles ouvertes. De tels conduits présentent également l'inconvénient d'un gonflement des produits sous pression. Du point de vue du procédé, on notera que l'outillage (tête de tricotage) doit être adapté à chaque plage de diamètre, et qu'il est difficile d'obtenir des conduits ayant une paroi fine.

Une autre technique mettant en oeuvre un guipage de fil assure une bonne tenue à la pression et à la déformation sous pression, mais est limitée à des diamètres encore plus petits (jusqu'à 30 à 35 mm).

Une troisième technique consiste en un tressage de fils. Elle assure une excellente tenue à la pression et une bonne plage de diamètres. Par contre, elle nécessite de disposer de plusieurs machines pour couvrir une large plage de diamètres. Enfin et surtout, elle ne permet que de réaliser des conduits à grand rayon de courbure et peu évasés.

Une quatrième technique de renforcement met en oeuvre un tricot plan de type "dentelle" généralement réalisé à partir de fils fins sur un métier à tricoter. La variété des formes des mailles permet une certaine maîtrise de l'extensibilité longitudinale et transversale. Cette technique permet de maîtriser en partie le problème de déformabilité sous pression et il convient à la réalisation des diamètres demandés pour les conduits de fluide.

Une augmentation des performances est possible en mettant en oeuvre plusieurs couches radiales, et il est possible de réaliser des pièces présentant des coudes ou des évasements.

Cette technique conduit à des coûts assez élevés, avec des performances mécaniques assez faibles sauf à mettre en oeuvre des conduits multicouches (par exemple à 4 couches), ce qui augmente le coût et nuit à la maîtrise des épaisseurs.

Une cinquième technique met en oeuvre un tissu plan obtenu sur un métier à tisser par croisement de fils tressés, d'où une extensibilité faible. Le tissu est généralement fin avec une ouverture de tresse qui permet une enduction (gommage) lors du calandrage.

A poids et masse de fil égaux, cette technique conduit à des performances mécaniques plusieurs fois supérieures à celles du tricot, avec un gommage plus aisé et une possibilité de réaliser de fines épaisseurs puisqu'il n'est plus besoin d'autant augmenter le nombre de couches de renfort pour augmenter les performances.

Ce procédé convient aux pièces droites, notamment à celles qui présentent des ondulations. Par contre, le coût est élevé.

Le tissu est relativement indéformable. Pour y remédier, il faut jouer sur l'angle de coupe du produit (d'où des pertes importantes de matière) ou en élaborant un tissu tubulaire à angle fixe (45°).

En conséquence, ce procédé ne convient pas aux pièces coudées et il est donc limité aux pièces droites simples, et aux pièces droites ondulées et/ou faiblement évasées.

La présente invention a pour objet un conduit souple de transfert de fluide qui peut être réalisé à volonté sous forme de sections ondulées et/ou évasées et/ou coudées, ce qui, on l'a vu n'était généralement pas possible avec les techniques de l'art antérieur.

Un autre objet de l'invention est la réalisation d'un conduit souple présentant des diamètres importants (par exemple jusqu'à 50 cm).

L'invention concerne ainsi un conduit souple en élastomère pour transfert de fluide présentant un élément de renforcement caractérisé en ce que ledit élément de renforcement comporte au moins une nappe tramée.

La nappe tramée est avantageusement déposée bord à bord, l'axe des nappes formant un angle $\theta$ avec l'axe du conduit.

L'élément de renforcement peut comporter une paire de nappes tramées déposées bord à bord avec des angles de pose opposés $\theta_p$ et $-\theta_p$. L'angle $\theta_p$ est par exemple compris entre 30° et 70° et plus particulièrement entre 30° et 54,7°.

La valeur de l'angle est de préférence sensiblement égale à $\theta_0 = 54,7°$ pour un conduit sous forme de section droite, ce qui permet de minimiser le gonflement sous pression.

L'invention concerne également un procédé de fabrication selon la revendication 5.

D'autres avantages de l'invention apparaîtront mieux à la lecture de la description ci-après, donnée à titre d'exemple non limitatif, en liaison avec les dessins dans lesquels :

-   la figure 1 représente un conduit selon l'invention, avec enroulement bord à bord ;
-   la figure 2 illustre un enroulement avec recouvrement selon l'art antérieur ;
-   les figures 3a à 3d illustrent des conduits selon l'invention droit, ondulé, évasé et/ou coudé.

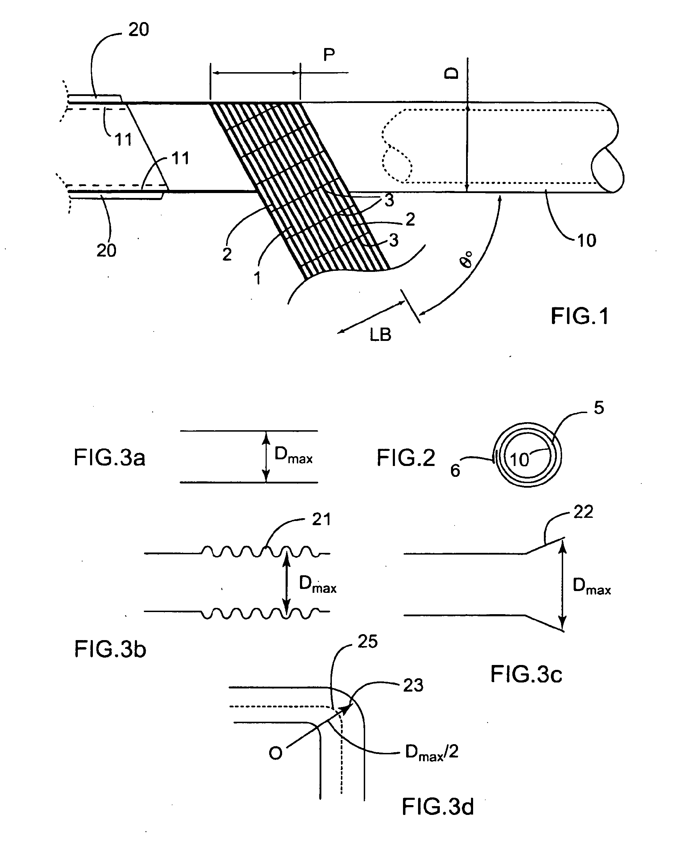

Comme le montre la figure 1, une nappe tramée 1 présentant des fils de nappe 2 et des fils de trame 3 est posée bord à bord sur un cylindre de formage 10 éventuellement revêtu de matériau élastomère 11 par exemple en silicone de diamètre D, avec un pas P. L'angle de pose $\theta_\rho$ est l'angle que forment les fils de nappe 2 avec l'axe du cylindre de formage 10. Les fils de nappe et les fils de trame peuvent être en fibres textiles par exemple polyester ou en fibres aramides, ou bien encore en métal. Avantageusement on dépose au moins une paire de nappes tramées avec des angles de pose $\theta_\rho$ opposés.

L'angle de pose $\theta_\rho$, est choisi pour obtenir l'équilibre des forces résultantes de pression à l'intérieur du conduit, de sorte que le conduit souple ne gonfle pas sous pression. Cet angle de pose $\theta_\rho$ tient avantageusement compte des régions comportant des coudes, des évasements et des ondulations, de manière à prendre en compte le diamètre maximal $D_{max}$ correspondant, comme illustré aux figures 3b à 3d, et de la manière décrite dans la suite de la description. Pour un conduit droit, on peut également tenir compte que par une étape de conformation, le diamètre $D_{max}$ du produit fini pourra être différent du diamètre D obtenu lors du formage sur le cylindre 10.

Le pas P est choisi de sorte que la dépose ait lieu bord à bord, ce qui fait qu'il n'y a pas de perte de matière comme c'est par contre le cas par exemple dans le cas des tissus tressés enroulés 5 (figure 2) qui présentent un angle de pose limité et imposé et un recouvrement 6 entre des bords parallèles à l'axe du conduit.

On pose de préférence deux nappes tramées croisées avec deux angles de pose égaux, mais opposés $+\theta_\rho$ et $-\theta_\rho$.

Ensuite, la ou les nappes tramées peuvent être recouvertes d'un revêtement 20 en élastomère, par exemple du silicone, et l'ensemble est conformé de manière connue en soi pour former le cas échéant des ondulations 21 et/ou au moins un coude 23 et/ou au moins un évasement 22.

Le conduit est ensuite vulcanisé pour fixer sa forme et ses caractéristiques mécaniques.

Le raccord en son état final peut avoir un diamètre $D_{max}$ supérieur au diamètre D lors de la formation sur le cylindre de formage D. On en tient compte pour que, sur le conduit final de diamètre $D_{max}$, l'angle que forment les fils 2 de la nappe tramée avec l'axe du conduit formé soit égal à $\theta_0$.

L'angle de pose $\theta_\rho$ peut être également adapté pour tenir compte du diamètre maximal $D_{max}$ correspondant à une ou plusieurs zones où lors d'une étape de conformation, on réalise au moins un coude, des ondulations et/ou au moins un évasement afin de minimiser la déformabilité sous pression (figures 3b à 3d).

Cette adaptation est réalisée de la manière suivante :

$$\mathrm{tg}\ \theta_0 = \pi D_{max}/P \qquad\qquad \text{avec}\ \theta_0 = 54{,}7°$$

$$\text{soit}\ \cos\theta_0 = LB/\pi D_{max} \qquad LB = \text{largeur de la nappe tramée.}$$

D'où l'angle de pose $\theta_\rho$ dans le conduit droit de diamètre D non encore mis en forme :

$$\mathrm{tg}\ \theta_\rho = \pi D/P = D/D_{max}\ \mathrm{tg}\ \theta_0$$

ce qui conduit à un angle de pose $\theta_\rho$ qui peut varier en pratique entre 30° et 70°, mais qui est en général inférieur à $\theta_0$, et est par exemple compris entre 30° et 54,7°.

Cette formule est valable qu'il s'agisse de conduits droits de diamètre $D_{max}$ différent de D (en général supérieur à D) ou de conduits coudés, ondulés et/ou évasés impliquant une valeur de $D_{max}$ différente de D (en général supérieur à D).

Le conduit selon l'invention présente un coût nettement plus faible qu'un conduit à base de tissu ou de tricot et se prête à l'obtention de diamètres beaucoup plus élevés que dans le cas du tissu. De plus, il se prête à tous les types de contours (ondulations 21 et/ou évasement 22 et/ou coudes 23) et bien entendu à la réalisation de sections droites souples ou combinées avec ces contours.

La maîtrise de l'angle de pose permet d'optimiser la déformabilité du conduit sous pression. Pour un conduit présentant plusieurs zones, par exemple un coude et des ondulations, on prend en compte la valeur maximale de $D_{max}$ qui est rencontrée. Dans une région coudée, l'angle $\theta_\rho$ est pris entre la direction des fils de nappe 2 et la tangente à l'axe 25 du coude.

La perte de matière est faible ou nulle, puisque l'enroulement peut être réalisé bord à bord.

Il existe également un gain de poids et de performance. Deux nappes tramées croisées permettent par exemple d'obtenir des performances correspondant à quatre couches de tricot. De plus, la pose peut être réalisée de manière automatique, d'où une meilleure qualité.

Enfin, les performances dynamiques sont améliorées par le fait qu'il n'y a pas de contact ou de croisement entre les fils. Les phénomènes d'abrasion sont ainsi limités, voire nuls.

On comprendra que l'angle $\theta_0$ de 54,7° constitue un optimum permettant d'entrer la déformation du conduit sous pression. Une valeur approchée de $\theta_0$ (par exemple entre 50° et 60°) peut être mise en oeuvre tout en permettant l'obtention de résultats satisfaisants.

**Revendications**

1. Procédé de fabrication d'un conduit souple en élastomère pour transfert de fluide, présentant un élément de renforcement, et mettant en oeuvre la pose d'au moins une nappe tramée (1) sur un cylindre de formage (10) éventuellement revêtu de matériau élastomère (11), puis un recouvrement de la ou des nappes tramées (1) par un revêtement (20) en élastomère, et enfin une vulcanisation, le conduit étant formé d'une section droite présentant un diamètre extérieur D, **caractérisé en ce que** le procédé met en oeuvre une étape de conformation pour lui conférer un diamètre $D_{max}$ différent de D,
ou **en ce qu'**il met en oeuvre une étape de conformation de sorte que le conduit présente au moins une zone ayant des ondulations (21) et/ou au moins un coude (23) et/ou au moins un évasement (22), $D_{max}$ étant alors le diamètre maximal du conduit dans la ou lesdites zones,
et **en ce que**, sur le conduit à l'état non conformé, l'angle de pose $\theta_\rho$ entre les fils de nappe d'une dite nappe avec l'axe du conduit est défini par :

$\text{tg}\theta_\rho = D/D_{max} \times \text{tg}\theta_0$ avec $\theta_0$ compris entre 50° et 60° et de préférence sensiblement égal à 54,7°, $\theta_0$ désignant l'angle sur le conduit conformé.

2. Procédé selon la revendication 1, **caractérisé en ce qu'**au moins une nappe tramée est posée bord à bord.

3. Procédé selon la revendication 2, **caractérisé en ce que** l'élément de renforcement comporte au moins une paire de nappes tramées posées bord à bord avec des angles de pose $\pm\,\theta_\rho$ opposés.

4. Procédé selon la revendication 3, **caractérisé en ce que** l'angle de pose $\theta_\rho$ est compris entre 30° et 70° et plus particulièrement entre 30° et 54,7°.

5. Conduit souple en élastomère pour transfert de fluide présentant un élément de renforcement comportant au moins une nappe tramée (1) comportant des fils de nappe et revêtue par un revêtement (20) en élastomère, le conduit ayant un diamètre externe maximal $D_{max}$, susceptible d'être fabriqué selon le procédé selon les revendications 1 à 4 à partir d'un conduit formé d'une section droite présentant un diamètre externe D, **caractérisé en ce que** le conduit à l'état conformé présente un diamètre externe. $D_{max}$ et un diamètre externe D non conformé, le diamètre externe $D_{max}$ différent de D ou bien présente à l'état conformé au moins une zone destinée à être conformée pour créer des ondulations (21) et/ou au moins un coude (23) et/ou au moins un évasement (22), $D_{max}$ étant alors le diamètre maximal du conduit dans la ou lesdits zones et **en ce que**, sur le conduit à l'état non conformé, l'angle de pose $\theta_\rho$ des fils de nappe par rapport à l'axe du conduit est défini par :

$\text{tg}\theta_\rho = D/D_{max} \times \text{tg}\theta_0$ avec $\theta_o$ compris entre 50° et 60° et de préférence sensiblement égal à 54,7°, $\theta_0$ désignant l'angle sur le conduit conformé.

6. Conduit souple selon la revendication 5, **caractérisé en ce que** la nappe tramée est déposée bord à bord, l'axe des fils de nappe des nappes formant ledit angle $\theta_\rho$ avec l'axe du conduit.

7. Conduit souple selon la revendication 5, **caractérisé en ce que** l'élément de renforcement comporte au moins une paire de nappes tramées posées bord à bord avec des angles $\pm\theta_\rho$ opposés.

8. Conduit souple selon la revendication 7, **caractérisé en ce que** l'angle $\theta_p$ est compris entre 30° et 70°.

9. Conduit souple selon la revendication 8, **caractérisé en ce que** l'angle $\theta_p$ est compris entre 30° et 54,7°.

**Claims**

1. A method of fabricating a flexible duct of elastomer for transferring fluid, the duct presenting a reinforcing element, and involving laying at least one laid-in web (1) on a forming cylinder (10) optionally covered in an elastomer material (11), and then covering the laid-in web(s) (1) with an elastomer covering (20), and finally performing vulcanization, the duct being formed by a straight section presenting an outside diameter D, the method being **characterized in that** it implements a shaping step to confer a diameter $D_{max}$ not equal to D, or

   · **in that** it implements a shaping step such that the duct presents at least one zone having corrugations (21), and/or at least one bend (23), and/or at least one flare (22), $D_{max}$ then being the maximum diameter of the duct in said zone (s) ; and

   · **in that**, on the duct in the non-shaped state, the laying angle $\theta_p$ between the warp yarns of such a web relative to the axis of the duct is defined by:

$$\tan \theta_p = D/D_{max} \times \tan \theta_0$$

   with $\theta_0$ lying in the range 50° to 60°, and preferably being substantially equal to 54.7°, $\theta_0$ designating the angle on the shaped duct.

2. A method according to claim 1, **characterized in that** at least one laid-in web is laid edge to edge.

3. A method according to claim 2, **characterized in that** the reinforcing element comprises at least one pair of laid-in webs laid edge to edge with opposite laying angles of $\pm\theta_p$.

4. A method according to claim 3, **characterized in that** the laying angle $\theta_p$ lies in the range 30° to 70°, and more particularly in the range 30° to 54.7°.

5. A flexible elastomer duct for transferring fluid and presenting a reinforcing element comprising at least one laid-in web (1) having warp yarns and covered with an elastomer covering (20), the duct having a maximum outside diameter $D_{max}$, suitable for being made in accordance with the method according to claims 1 to 4 from a duct formed by a straight section presenting an outside diameter D, the duct being **characterized in that** the duct in the shaped state presents an outside diameter $D_{max}$ and a non-shaped outside diameter D, the outside diameter $D_{max}$ being not equal to D, or presents in the shaped state at least one zone that is designed to be shaped so as to create corrugations (21), and/or at least one bend (23), and/or at least one flare (22), $D_{max}$ then being the maximum diameter of the duct in said zone(s), and **in that**, on the duct in the non-shaped state, the laying angle $\theta_p$ between the warp yarns relative to the axis of the duct is defined by:

$$\tan \theta_p = D/D_{max} \times \tan \theta_0$$

   with $\theta_0$ lying in the range 50° to 60°, and preferably being substantially equal to 54.7°, $\theta_0$ designating the angle on the shaped duct.

6. A flexible duct according to claim 5, **characterized in that** the laid-in web is laid edge to edge, the axis of the warp yarns of the web forming said angle $\theta_p$ with the axis of the duct.

7. A flexible duct according to claim 5, **characterized in that** the reinforcing element comprises at least one pair of laid-in webs laid edge to edge with opposite laying angles of $\pm\theta_p$.

8. A flexible duct according to claim 7, **characterized in that** the angle $\theta_p$ lies in the range 30° to 70°.

9. A flexible duct according to claim 8, **characterized in that** the angle $\theta_p$ lies in the range 30° to 54.7°.

**Patentansprüche**

1. Verfahren zur Herstellung einer flexiblen Leitung aus Elastomer zum Fluidtransfer, welche ein Verstärkungselement aufweist, und welches das Legen wenigstens eines Cordgewebes (1) auf einen Formzylinder (10), welcher gegebenenfalls mit elastomerem Material (11) beschichtet ist, dann ein Bedecken des Cordgewebes (m) (1) durch eine Beschichtung (20) aus Elastomer und schließlich eine Vulkanisierung einsetzt, wobei die Leitung mit einem Querschnitt ausgebildet wird, der einen Außendurchmesser D aufweist, **dadurch gekennzeichnet, dass** das Verfahren einen Anpassungsschritt einsetzt, um ihr einen von D unterschiedlichen Durchmesser $D_{max}$ zu verleihen, oder dass es einen Anpassungsschritt einsetzt, sodass die Leitung wenigstens einen Bereich mit Wellen (21) und/oder wenigstens einer Biegung (23) und/oder wenigstens einer Aufweitung (22) aufweist, wobei $D_{max}$ dann der Maximaldurchmesser der Leitung in dem oder den Bereichen ist, und dass auf der Leitung im nicht angepassten Zustand der Verlegungswinkel $\theta_p$ zwischen den Gewebefäden eines genannten Gewebes mit der Achse der Leitung definiert ist durch:

$$\text{tg}\theta_p = D/D_{max} \times \text{tg}\theta_0,$$ wobei $\theta_0$ zwischen 50 ° und 60 ° enthalten und bevorzugt im Wesentlichen gleich 54,7° ist, wobei $\theta_0$ den Winkel an der angepassten Leitung bezeichnet.

2. Verfahren nach Anspruch 1, **dadurch gekennzeichnet, dass** das wenigstens eine Cordgewebe auf Stoß verlegt wird.

3. Verfahren nach Anspruch 2, **dadurch gekennzeichnet, dass** das Verstärkungselement wenigstens ein Paar von Cordgeweben umfasst, welche auf Stoß mit entgegengesetzten Verlegungswinkeln $\pm \theta_p$ verlegt werden.

4. Verfahren nach Anspruch 3, **dadurch gekennzeichnet, dass** der Verlegungswinkel $\theta_p$ zwischen 30° und 70° und insbesondere zwischen 30° und 54,7° enthalten ist.

5. Flexible Leitung aus Elastomer zum Fluidtransfer, welche ein Verstärkungselement aufweist, welches wenigstens ein Cordgewebe (1) umfasst, welches Gewebefäden umfasst und mit einer Beschichtung (20) aus Elastomer beschichtet ist, wobei die Leitung einen maximalen äußeren Durchmesser $D_{max}$ aufweist, welche geeignet ist, gemäß dem Verfahren nach den Ansprüchen 1-4 ausgehend von einer Leitung hergestellt zu werden, welche mit einem Querschnitt ausgebildet ist, der einen äußeren Durchmesser D aufweist, **dadurch gekennzeichnet, dass** die Leitung einen äußeren Durchmesser $D_{max}$ und einen nicht angepassten äußeren Durchmesser D aufweist, wobei der äußere Durchmesser $D_{max}$ unterschiedlich von D ist, oder im angepassten Zustand wenigstens einen Bereich aufweist, welcher dazu bestimmt ist, angepasst zu werden, um Wellen (21) und/oder wenigstens eine Biegung (23) und/oder wenigstens eine Aufweitung (22) zu erzeugen, wobei $D_{max}$ dann der maximale Durchmesser der Leitung in dem oder den Bereichen ist, und dass an der Leitung im nicht angepassten Zustand der Verlegungswinkel $\theta_p$ der Gewebefäden bezüglich der Achse der Leitung definiert ist durch:

$$\text{tg}\theta_p = D/D_{max} \times \text{tg}\theta_0,$$ wobei $\theta_0$ zwischen 50 ° und 60 ° enthalten und vorzugsweise im Wesentlichen gleich 54,7° ist, wobei $\theta_0$ den Winkel an der angepassten Leitung bezeichnet.

6. Flexible Leitung nach Anspruch 5, **dadurch gekennzeichnet, dass** das Cordgewebe auf Stoß verlegt ist, wobei die Achse von Gewebefäden der Gewebe den Winkel $\theta_p$ mit der Achse der Leitung bildet.

7. Flexible Leitung nach Anspruch 5, **dadurch gekennzeichnet, dass** das Verstärkungselement wenigstens ein Paar von Cordgeweben umfasst, welche mit entgegengesetzten Winkeln $\pm \theta_p$ auf Stoß verlegt sind.

8. Flexible Leitung nach Anspruch 7, **dadurch gekennzeichnet, dass** der Winkel $\theta_p$ zwischen 30° und 70° enthalten ist.

9. Flexible Leitung nach Anspruch 8, **dadurch gekennzeichnet, dass** der Winkel $\theta_p$ zwischen 30° und 54,7° enthalten ist.

FIG.1

FIG.3a

FIG.2

FIG.3b

FIG.3c

FIG.3d

**EP 1 855 041 B1**

**RÉFÉRENCES CITÉES DANS LA DESCRIPTION**

**Documents brevets cités dans la description**

- US 3212528 A